# EUROPÄISCHE PATENTSCHRIFT

(11) **EP 3 327 349 B1**
(45) Veröffentlichungstag und Bekanntmachung des Hinweises auf die Patenterteilung: **23.10.2024**
(21) Anmeldenummer: 17193275.9
(22) Anmeldetag: 26.09.2017
(51) Int. Cl.: F24H 3/04, F23C 3/00, F26B 11/04, F26B 11/02, F26B 21/04, F26B 23/02, E01C 19/10, E01C 19/05

(54) **HEISSGASERZEUGER ZUM ERWÄRMEN VON GAS SOWIE ANLAGE FÜR DIE ASPHALTHERSTELLUNG MIT EINEM DERARTIGEN HEISSGASERZEUGER**
HOT GAS GENERATOR FOR HEATING GAS AND SYSTEM FOR ASPHALT MANUFACTURE WITH SUCH A HOT GAS GENERATOR
GÉNÉRATEUR DE GAZ CHAUD PERMETTANT DE CHAUFFER UN GAZ AINSI QU'INSTALLATION POUR LA PRODUCTION DE BITUME POURVUE D'UN TEL GÉNÉRATEUR DE GAZ CHAUD

(30) Priorität: 23.11.2016 DE 102016223200
(43) Veröffentlichungstag der Anmeldung: 30.05.2018
(73) Patentinhaber: Benninghoven Zweigniederlassung der Wirtgen Mineral Technologies GmbH, 54516 Wittlich (DE)
(72) Erfinder: Wagner, Frank, 54492 Zeltingen-Rachtig (DE)
(74) Vertreter: Rau, Schneck & Hübner Patentanwälte Rechtsanwälte PartGmbB

(56) Entgegenhaltungen:
- EP-A1- 0 044 063
- EP-A1- 3 135 996
- CH-A- 192 424
- DE-A1- 19 530 164
- DE-A1- 3 740 858
- FR-A5- 2 188 804
- US-A- 3 846 066
- US-A- 6 079 974
- ROCKWOOL: "Prozesshandbuch für Dämmungen in betriebstechnischen Anlagen", 15 May 2014 (2014-05-15), pages 76 - 77, XP093054894, Retrieved from the Internet <URL:http://download.rockwool-rti.de/media/910079/prozesshandbuch_rti_150514_online.pdf> [retrieved on 20230615]

## Beschreibung

Die Erfindung betrifft einen Heißgaserzeuger zum Erwärmen von Gas sowie eine Anlage für die Asphaltherstellung mit einem derartigen Heißgaserzeuger.

Die vorliegende Patentanmeldung nimmt die Priorität der deutschen Patentanmeldung DE 10 2016 223 200.2 in Anspruch.

Für die Asphaltherstellung ist es erforderlich, Material, insbesondere Gesteinsmaterial und/oder Altasphaltmaterial, also recyceltes Gesteinsmaterial, zu erwärmen und zu trocknen. Anlagen für die Asphaltherstellung sind bekannt aus DE 10 2015 217 845 A1, DE 30 26 516 A1 und DE 691 05 535 T2. Für die Wärmezufuhr in einen Trockner kann ein Heißgaserzeuger dienen, indem mittels einer Wärmequelle Heißgas erzeugt und dem Trockner zugeführt wird. Ein Heißgaserzeuger ist bekannt aus FR 2 188 804 A5, EP 0 044 063 A1, CH 192 424 A und aus DE 195 30 164 A1. Eine Wärmequelle für einen derartigen Heißgaserzeuger ist bekannt aus DE 37 40 858 A1 und aus US 3,846,066 A. Mit dem Heißgaserzeuger bereitgestelltes Heißgas weist einen erhöhten Schadstoffanteil auf, insbesondere in Form von Kohlenwasserstoffverbindungen. Zusätzlich ist ein erhöhter Anteil an Feinpartikeln in dem Heißgas vorhanden.

Der Erfindung liegt die Aufgabe zugrunde, die Bereitstellung von Wärme mittels Heißgas für eine Trockeneinheit durch einen Heißgaserzeuger derart zu verbessern, dass Verunreinigungen im Heißgas, insbesondere Kohlenwasserstoff-Anteile und/oder Feinpartikel, reduziert sind.

Die Aufgabe wird durch die Merkmale der Ansprüche 1 und 5 gelöst. Der Kern der Erfindung besteht darin, dass der Heißgaserzeuger im Gegenstromverfahren betrieben wird. Dazu ist eine Wärmeausbreitungsrichtung einer Gasströmungsrichtung entgegengesetzt orientiert. Entgegengesetzt bedeutet, dass die Wärmeausbreitungsrichtung und die Gasströmungsrichtung insbesondere antiparallel orientiert sind. Eine entgegengesetzte Orientierung im Sinne der Erfindung ist auch dann gegeben, wenn die Gasströmungsrichtung und die Wärmeausbreitungsrichtung mit einem Neigungswinkel zueinander angeordnet sind, der insbesondere höchstens 20°, insbesondere höchstens 15°, insbesondere höchstens 10° und insbesondere höchstens 5° beträgt. Der Neigungswinkel kann beispielsweise daraus resultieren, dass eine der Richtungen parallel zu einer Längsachse eines zylindrischen Gehäuses des Heißgaserzeugers orientiert und die jeweils andere Richtung gegenüber der Längsachse geneigt angeordnet ist. Es ist auch denkbar, dass beide Richtungen gegenüber der Längsachse jeweils mit einem Neigungswinkel angeordnet sind. Dadurch, dass der Heißgaserzeuger im Gegenstromsystem betrieben wird, ist die Verbrennung von Kohlenwasserstoffanteilen besonders effizient, also rückstandslos, möglich. Der Schadstoffanteil im Heißgas, das den Heißgaserzeuger verlässt, ist reduziert. Insbesondere ist der Anteil an Kohlenstoffmonoxid (CO) und/oder Kohlenstoffdioxid (CO₂) und insbesondere der Gesamtkohlenstoffanteil C_{ges} reduziert. Zusätzlich ist eine Strömungsumlenkeinheit vorgesehen, die eine Umlenkung der Gasströmung im Gehäuse des Heißgaserzeugers ermöglicht. Die Strömungsumlenkeinheit ist innerhalb des Gehäuses des Heißgaserzeugers angeordnet. Die Strömungsumlenkeinheit dient zur Umlenkung der Gasströmung von der Gas-Zuströmöffnung zu der Gas-Abführöffnung innerhalb des Gehäuses. Durch die Strömungsumlenkeinheit wird die Gasströmung daran gehindert, entlang einer gedachten Linie unmittelbar von der Gas-Zuströmöffnung zu der Gas-Abführöffnung zu strömen. Durch die Strömungsumlenkeinheit ist eine direkte lineare Strömungsrichtung von der Gas-Zuführöffnung zu der Gas-Abführöffnung ausgeschlossen. Die Strömungsumlenkeinheit bewirkt eine nichtlineare Gasströmung innerhalb des Gehäuses und insbesondere unabhängig von der Anordnung der Gas-Zuführöffnung und der Gas-Abführöffnung. Mit der Strömungsumlenkeinheit kann die Gasströmung gezielt umgelenkt werden. Die Gas-Zuströmöffnung und/oder die Gas-Abführöffnung sind insbesondere an einer äußeren Mantelwand des zylinderförmig ausgeführten, Gehäuses des Heißgaserzeugers angeordnet. Die jeweilige Flächennormale der Gas-Zuströmöffnung und/oder der Gas-Abführöffnung ist jeweils senkrecht, insbesondere radial, zur Längsachse des Gehäuses orientiert. Die Strömungsumlenkeinheit ist nicht nur dadurch gebildet, dass die Gasströmung in Folge des Eintritts durch die Gas-Zuströmöffnung in das Gehäuse von einer im Wesentlichen radialen Zuströmrichtung in eine im Wesentlichen axial orientierte Gas-Strömungsrichtung geändert wird. Es wurde gefunden, dass in Folge der vorteilhaften Strömungsumlenkung die Effizienz des Verbrennungsprozesses von Kohlenstoffverbindungen in dem zugeführten Gas verbessert wird. Die Strömungsumlenkeinheit ermöglicht eine Umströmung einer Brennerflamme, die als Wärmequelle an den Heißgaserzeuger anschließbar ist. Insbesondere ist das dem Heißgaserzeuger zugeführte Gas das Abgas der Trockeneinheit. Der Heißgaserzeuger und die Trockeneinheit sind über Gas-Rohrleitungen miteinander verbunden und bilden ein geschlossenes Umluftsystem.

Eine Isolationsschicht, die an einer Innenseite des Gehäuses angeordnet ist, gewährleistet eine zuverlässige Wärmeisolation.

Ein bezüglich der Längsachse ringförmiger Strömungskanal der Strömungsumlenkeinheit ermöglicht eine besonders vorteilhafte Umlenkung der Gasströmung. Ein derartiger Strömungskanal wird als Drallgeber bezeichnet. Der Drallgeber erzeugt eine bezüglich der Längsachse schraubenlinienförmige Gasströmung. Die schraubenlinienförmige Gasströmung ist um die offene Brennerflamme der Wärmequelle herum geführt. Ein direktes Zuführen des Heißgases in die Brennerflamme ist vermieden. Ein Auskühlen der Brennerflamme wird vermieden. Die Kohlenwasserstoffe gehen in den gasförmigen Zustand über, so dass sich eine effektivere Verbrennung der Kohlenstoffverunreinigungen im Abgas ergibt. Die Gasströmung wird mittels der Strömungsumlenkeinheit unmittelbar, insbesondere innerhalb des Gehäuses, beeinflusst. Die Gasströmung folgt einer erzwungenen Gasströmungsrichtung, die von der direkten Verbindungslinie zwischen Gas-Zuführöffnung und Gas-Abführöffnung abweicht. Ein ringförmiger Strömungskanal dient für einen Hauptstrom des zugeführten Gases.

Ein Strömungsumlenkelement mit mindestens einem Strömungsumlenkelement ermöglicht ein vorteilhaftes Abzweigen zumindest eines Teilstroms des zugeführten Gases. Der abgezweigte Teilstrom dient zur gezielten Kühlung des Brennraums des Heißgaserzeugers.

Ein Brennraum, der sich entlang der Wärmeausbreitungsrichtung verjüngt, ermöglicht eine effiziente Abführung des im Heißgaserzeuger erzeugten Heißgases. Der Brennraum ermöglicht einerseits eine Ausbreitung der offenen Brennerflamme in dem Brennraum. Der sich insbesondere konisch entlang der Wärmeausbreitungsrichtung verjüngende Brennraum ermöglicht zudem eine gezielte Konzentration des Heißgasstromes hin zu der Gas-Abführöffnung.

Bei einer Anordnung der Strömungsumlenkeinheit gemäß Anspruch 2 ist die Gasströmung innerhalb des Heißgaserzeugers verbessert. Insbesondere ist gewährleistet, dass das über die Gas-Zuströmöffnung zugeführte Gas unmittelbar der Strömungsumlenkeinheit zugeführt wird. Dadurch ist eine effiziente, fehlerfreie Strömungsumlenkung gewährleistet. Das Risiko, dass das zugeführte Gas unbeabsichtigt und insbesondere unkontrolliert der Brennerflamme der Wärmequelle zugeführt wird, ist verhindert. Eine benachbarte Anordnung der Strömungsumlenkeinheit ist insbesondere dadurch gegeben, dass die Strömungsumlenkeinheit entlang der Längsachse im Wesentlichen im Bereich der Gas-Zuströmöffnung angeordnet ist. Die Gas-Zuströmöffnung ist insbesondere an einer äußeren Mantelfläche des zylindrischen Gehäuses des Heißgaserzeugers angeordnet. Insbesondere sind die Strömungsumlenkeinheit und die Gas-Zuströmöffnung entlang einer radialen Richtung bezogen auf die Längsachse zumindest teilweise fluchtend und insbesondere vollständig fluchtend angeordnet.

Ein Abschirmelement gemäß Anspruch 3 verhindert einen unbeabsichtigten Austritt der Brennerflamme und/oder von Heißgas durch die Gas-Abführöffnung. Insbesondere erstreckt sich das Abschirmelement entlang der Längsachse über die Querschnittsöffnung der Gas-Abführöffnung hinaus.

Die Ausführung des Abschirmelements gemäß Anspruch 4 ermöglicht eine unkomplizierte Abschirmung der Gas-Abführöffnung.

Eine Anlage für die Asphaltherstellung gemäß Anspruch 5 mit einem erfindungsgemäßen Heißgaserzeuger weist im Wesentlichen dessen Vorteile auf, worauf hiermit verwiesen wird. Dadurch, dass die Trockeneinheit und der Heißgaserzeuger über eine Umluft-Rohrleitung miteinander verbunden sind und ein geschlossenes Kreislaufsystem bilden, ist die Effizienz der Anlage verbessert und der Schadstoffausstoß verringert.

Die Ausführung der Trockeneinheit als Gegenstromtrommel gemäß Anspruch 6 ermöglicht eine zusätzliche Effizienzsteigerung für die Materialtrocknung. Das Altasphaltmaterial kann in der Gegenstromtrommel indirekt und damit schonend auf bis zu 160 °C und mehr erwärmt werden. Das Verfahren weist insgesamt eine positive Gesamtenergiebilanz auf. Die Emissionswerte liegen bei weniger als 100 mg/Nm³, insbesondere weniger als 70 mg/Nm³ und insbesondere bei weniger als 50 mg/Nm³.

Aufgrund der reduzierten Verunreinigungen der Umluft im Umluftkreislaufsystem ist eine Reinigung des Systems und insbesondere der Ventilatoren entlang des Umluftkreislaufsystems entbehrlich. Es ist möglich, im Bereich des Trommelauslaufs, also im Bereich des Materialauslaufs, eine Additivzugabe vorzusehen. Das Material hat Zeit zu reagieren. Dadurch kann die Penetration des Bitumens herabgesetzt werden, so dass Quoten von bis zu 90 % und mehr von Altasphaltmaterial möglich sind.

Das gezielte Abführen des getrockneten Materials über einen Materialauslauf gemäß Anspruch 7 ermöglicht eine gezielte Überwachung und Kontrolle der Materialaufbereitung.

Ein Temperatursensor im Bereich des Materialauslaufs gemäß Anspruch 8 ermöglicht eine Überwachung der Materialtemperatur.

Eine Regelungseinheit gemäß Anspruch 9 ermöglicht einen geregelten Betrieb der Anlage, insbesondere die Trocknung des Materials derart, dass eine gezielte Soll-Materialtemperatur eingehalten wird. Sofern die Ist-Materialtemperatur von einem veränderlich vorgebbaren Toleranzbereich einer Soll-Materialtemperatur abweicht, kann beispielsweise die Heißgastemperatur und/oder die Menge des Materialstroms in der Trockeneinheit entsprechend verändert werden.

Eine Heißgasrohrleitung gemäß Anspruch 10 dient zum Transport des im Heißgaserzeuger erzeugten Heißgases an einen Verbraucher, insbesondere an eine Trockeneinheit. Mindestens ein Strömungsleitelement gewährleistet eine vorteilhafte, insbesondere drallförmige Heißgasströmung entlang der Heißgasrohrleitung. Die Wärmeverteilung des Heißgases entlang der Heißgasrohrleitung ist verbessert, insbesondere homogener. Der Wärmetransport von dem Heißgaserzeuger zu der Trockeneinheit entlang der Heißgasrohrleitung ist verbessert. Der Wärmeverlust entlang der Heißgas-rohrleitung ist reduziert. Der beim Verbraucher ankommende Heißgasstrom ermöglicht eine verbesserte Trocknung und/oder Erwärmung.

Die Ausführung des Strömungsleitelements gemäß Anspruch 11 ist konstruktiv unaufwändig und mechanisch robust. Das Strömungsleitelement ist insbesondere als angeschweißtes Leitblech ausgeführt, das sich um die Rohrleitungslängsachse schraubenlinienförmig zumindest abschnittsweise entlang einer Innenfläche der Heißgasrohrleitung erstreckt.

Weitere vorteilhafte Ausgestaltungen, zusätzliche Merkmale und Einzelheiten der Erfindung ergeben sich aus der nachfolgenden Beschreibung eines Ausführungsbeispiels anhand der Zeichnung. Es zeigen:
- Fig. 1: eine schematische Darstellung einer Anlage für die Asphaltherstellung mit einem Heißgaserzeuger gemäß der Erfindung,
- Fig. 2: eine Seitenansicht des Heißgaserzeugers gemäß Fig. 1,
- Fig. 3: eine teiltransparente Draufsicht auf den Heißgaserzeuger gemäß Fig. 2,
- Fig. 4: eine vergrößerte Detailansicht gemäß Detail IV in Fig. 2, und
- Fig. 5: eine vergrößerte Detailansicht eines Abschnitts einer Heißgasrohrleitung zum Verbinden des Heißgaserzeugers mit einer Trockeneinheit.

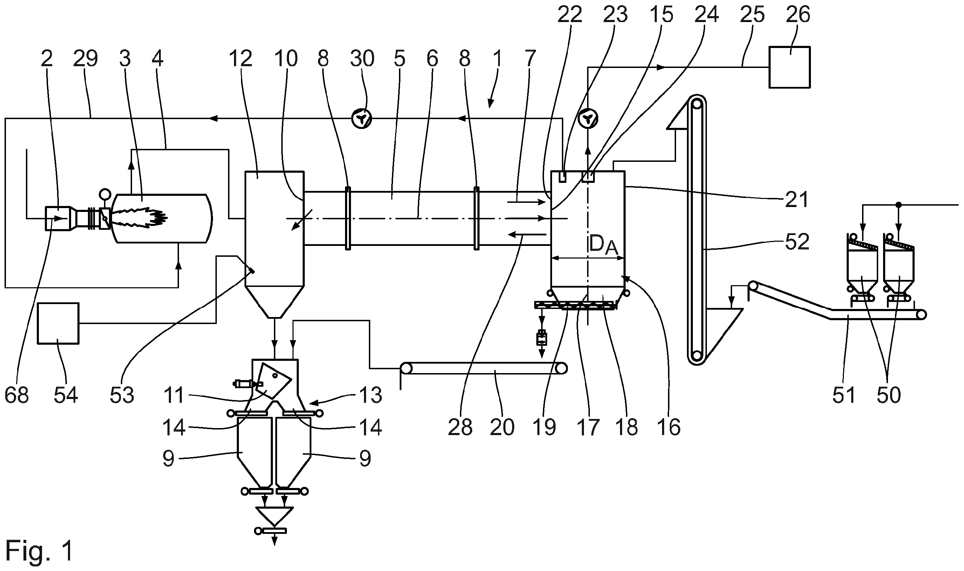

Eine in Fig. 1 dargestellte Anlage 1 dient zum Erwärmen von Material für die Asphaltherstellung. Das mit der Anlage 1 erwärmte Material ist insbesondere Altasphalt, sogenanntes Recyclingmaterial.

Die Anlage 1 umfasst eine als Brenner ausgeführte Wärmequelle 2, die an einen Heißgaserzeuger 3 angeschlossen ist. In dem Heißgaserzeuger 3 erhitzte Luft wird über eine Heißgasleitung 4 einer Trockeneinheit 5 zugeführt. Die Heißgasleitung 4 ist an einer ersten, in Fig. 1 links dargestellten ersten Stirnwand 10 der Trockeneinheit 5 angeschlossen. An der ersten Stirnwand 10 weist die Trockeneinheit 5 eine integrierte Schurre auf, um Material aus der Trockeneinheit 5 verbessert abgeben zu können. Die Heißgasleitung 4 ist eine Rohrleitung.

Die Trockeneinheit 5 ist als Trockentrommel ausgeführt, die um eine Drehachse 6 drehbar ist. Dazu dienen Drehantriebe und Drehlagerungen 8. Die Drehachse 6 ist gegenüber einem Boden, der insbesondere horizontal orientiert ist, geneigt angeordnet. Der Neigungswinkel der Drehachse 6 gegenüber der Horizontalen beträgt insbesondere weniger als 10 °, insbesondere weniger als 8 ° und insbesondere weniger als 5 °. Die Trockentrommel der Trockeneinheit 5 weist an der Innenseite mehrere Schaufelelemente auf, um das Material in der Trockeneinheit 5 umzuwälzen, zu vermischen und insbesondere entlang der Drehachse 6 in Richtung der ersten Stirnwand 10 zu fördern. Über eine Einlauf-Schurre wird das zu trocknende Material der Trockeneinheit 5 an der zweiten Stirnseite 15 zugeführt. Der Materialstrom in der Trockeneinheit 5 ist von einer zweiten Stirnseite 15 zu der ersten Stirnwand 10, also gemäß Fig. 1 von rechts nach links entlang des Pfeils 28 gerichtet.

An der ersten Stirnwand 10 ist der Materialauslauf 12 der Trockeneinheit 5 angeordnet. Der Materialauslauf 12 ist im Wesentlichen trichterartig ausgeführt und dient zur Aufnahme des Materials aus der Schurre. Der Materialauslauf 12 ist unterhalb der Schurre angeordnet. Das Material kann aus der Schurre selbsttätig infolge der Schwerkraft in den Materialauslauf 12 gelangen.

Im Bereich des Materialauslaufs 12 ist ein Temperatursensor 53 in Form einer IR-Sonde angeordnet. Der Temperatursensor 53 steht mit einer Regelungseinheit 54 in Signalverbindung. Die Regelungseinheit 54 dient zum geregelten Betreiben der Anlage 1, wobei insbesondere die von dem Temperatursensor 53 erfasste Ist-Temperatur des Materials im Materialauslauf 12 erfasst wird und als Eingangsgröße für die Regelung dient. Mittels der Regelungseinheit 54 können insbesondere die Heißgastemperatur des vom Heißgaserzeuger 3 erzeugten Heißgases und/oder der Materialstrom der Trockeneinheit 5, also die je Zeiteinheit geförderte Materialmenge, beeinflusst werden.

An einer Unterseite des Materialauslaufs 12 ist eine zweite Schurre 13 mit Weichenelement 11 und zwei Abgabekanälen 14 angeordnet. Die Abgabekanäle 14 dienen jeweils zur Speisung eines Puffersilos 9. Mittels des Weichenelements 11 können die Abgabekanäle 14 wechselweise mit Material beaufschlagt werden. Es können auch mehr als zwei Abgabekanäle 14 vorgesehen sein. Es ist auch denkbar, dass lediglich ein Abgabekanal vorgesehen ist. In diesem Fall kann das Weichenelement entfallen.

Es ist auch denkbar, dass über die Abgabekanäle 14 das Material unmittelbar, also ohne ein zwischengeschaltetes Puffersilo 9, in einen Mischer gefördert wird. Gemäß dem gezeigten Ausführungsbeispiel gelangt das Material aus dem Puffersilo 9 zur weiteren Verarbeitung in den Mischer, der aus Darstellungsgründen nicht gezeigt ist.

An der ersten Stirnwand 10 gegenüberliegend angeordneten Stirnseite 15 ist die Trockeneinheit 5 mit einer Absaughaube 16 verbunden. Die Absaughaube 16 weist ein im Wesentlichen zylindrisches Gehäuse 21 auf, wobei eine Gehäuselängsachse 17 im Wesentlichen senkrecht zu der Drehachse 6 der Trockeneinheit 5 orientiert ist. Die Gehäuselängsachse 17 ist im Wesentlichen vertikal orientiert. In einem unteren Bereich der Absaughaube 16 ist ein Sammelbehälter 18 für Feinpartikel angeordnet. In einem dem Gehäuse 16 abgewandten unteren Bereich ist der Sammelbehälter 18 konisch ausgeführt, um eine Sammelwirkung und insbesondere eine Abgabe der Feinpartikel aus dem Sammelbehälter 18 zu verbessern.

An einer dem Gehäuse 21 abgewandten Unterseite des Sammelbehälters 18 ist eine Fördervorrichtung mit einer Förderschnecke 19 angeordnet. Die Fördervorrichtung dient zum Abfördern von in dem Sammelbehälter 18 gesammelten Material. Die Fördervorrichtung umfasst ferner ein Förderband 20, das mit dem Material aus dem Sammelbehälter 18 über die Förderschnecke 19 beaufschlagt wird. Das Förderband 20 mündet mit dem Materialauslauf 12 in die zweite Schurre 13. Die Fördervorrichtung kann alternativ oder zusätzlich zu dem Förderband 20 eine Trogschnecke aufweisen. Wesentlich ist, dass mittels der Fördervorrichtung das Material aus dem Sammelbehälter 18 zu dem Materialauslauf 12 gefördert wird. Die Förderrichtung ist im Wesentlichen horizontal orientiert.

Das Gehäuse 21 der Absaughaube 16 weist eine der Stirnseite 15 zugewandte Zuströmöffnung 22 auf. Über die Zuströmöffnung 22 kann partikelhaltiges Gas aus der Trockeneinheit 5 in das Gehäuse 21 entlang der Gasströmungsrichtung 7 strömen. Die Zuströmöffnung 22 ist in der äußeren Zylindermantelwand des Gehäuses 21 angeordnet. Die Zuströmöffnung 22 ist im Wesentlichen senkrecht zur Drehachse 6 der Trockeneinheit 5 orientiert. Die Zuströmöffnung 22 ist im Wesentlichen vertikal orientiert.

Das Gehäuse 21 weist eine Umluft-Abströmöffnung 23 auf, an die eine Umluft-Rückführleitung 29 angeschlossen ist, um Umluft aus der Absaughaube 16 zu dem Heißgaserzeuger 3 zurückzuführen. Entlang der Umluft-Rückführleitung 29 ist ein Gebläse 30 angeordnet. Die Abgashaube 16 weist eine Abluft-Abströmöffnung 24 auf, an die eine Abluft-Rückführleitung 25 zur Verbindung mit einer rein schematisch dargestellten Filteranlage 26 dient.

Entlang der Gehäuselängsachse 17 sind die Umluft-Abströmöffnung 23 und die Abluft-Abströmöffnung 24 oberhalb der Zuströmöffnung 22 angeordnet. Die Zuströmöffnung 22 verbindet die Umluft-Abströmöffnung 23 und die Abluft-Abströmöffnung 24 über einen Strömungskanal, der durch das Gehäuse 21 der Absaughaube 16 gebildet ist. Das Gehäuse 21 weist einen Innendurchmesser D_{A} auf, der eine Strömungsquerschnittfläche des Strömungskanals definiert.

Das Material, insbesondere das Altasphaltmaterial, wird von Doseuren 50 auf ein Zuführ-Förderband 51 dosiert abgegeben und einem Elevator 52 zugeführt. Über den Elevator 52 erfolgt die Zuführung des Materials über eine nicht näher dargestellte Einlaufschurre im Bereich der zweiten Stirnwand 15 an der Trockeneinheit 5.

Nachfolgend wird die Funktion der Anlage 1 näher erläutert. Über die Einlaufschurre am Materialeinlauf wird Material der Trockeneinheit 5 zugeführt. In der Trockeneinheit 5 wird das Material durch Zuführen von Heißgas an der ersten Stirnwand 10 erwärmt und durch Drehung der Drehtrommel um die Drehachse 6 umgewälzt. Die Trockeneinheit 5 wird im Gegenstromverfahren betrieben, d. h. die zugeführte Wärme, also das Heißgas, strömt mit der Gasströmungsrichtung 7 entgegen der Materialströmungsrichtung 28 von der ersten Stirnwand 10 zu der zweiten Stirnseite 15. Getrocknetes Material wird an den Materialauslauf 12 abgegeben.

Partikelhaltiges abgekühltes Gas aus der Trockeneinheit 5 gelangt über die Zuströmöffnung 22 in die Absaughaube 16. Die Strömungsquerschnittfläche der Absaughaube 16 ist derart groß gewählt, dass sich eine Strömungsgeschwindigkeit des zuströmenden Gases ergibt, die gemäß dem gezeigten Ausführungsbeispiel kleiner ist als 2 m/s. Aufgrund der reduzierten Strömungsgeschwindigkeit und insbesondere der Tatsache, dass das aufströmende Gas von der Zuströmöffnung 22 zu mindestens einer der beiden Abströmöffnungen 23 und/oder 24 strömt, werden Partikel in dem Gas selbsttätig infolge der Schwerkraft aus dem Gasstrom abgeschieden und im Sammelbehälter 18 gesammelt. Die in dem Sammelbehälter 18 gesammelten Partikel werden über die Förderschnecke 19 und das Förderband 20 zu dem Materialauslauf 12 gefördert. Die aus der Absaughaube 16 abgegebene Luft, die entweder als Abluft in die Filteranlage 26 abgeführt oder als Umluft dem Heißgaserzeuger 3 zugeführt wird, ist gereinigt. Die damit verbundenen Rohrleitungen werden nicht zusätzlich verschmutzt. Eine Strömungsgeschwindigkeit der Abluft bzw. Umluft in den Rohrleitungen beträgt etwa 20 m/s.

Ein nicht dargestelltes Strömungsleitelement in der Absaughaube 16 bewirkt eine zusätzlich verbesserte Partikelabscheidung. Ein Abgasstrom aus der Trockeneinheit 5 kann aufgrund des Strömungsleitelements nicht ungehindert durch die Zuströmöffnung 22 in die Absaughaube 16 strömen. Das im Wesentlichen horizontal einströmende Abgas muss das Strömungsleitelement umströmen und wird dadurch zumindest bereichsweise nach unten, zu dem Sammelbehälter 18 hin beschleunigt. Durch die Beschleunigung nach unten kann die Abgasströmung in diesem Bereich etwa bis zu 6 m/s betragen. Anschließend ändert die Abgasströmung die Richtung hin zu den Abströmöffnungen 23, 24. Durch die vergleichsweise starke Beschleunigung im Bereich des Strömungsleitelements werden insbesondere schwere Partikel aus dem Materialstrom abgeschieden. Anschließend steigt der Abgasstrom mit der reduzierten Strömungsgeschwindigkeit von etwa 2 m/s zu den Abströmöffnungen 23, 24.

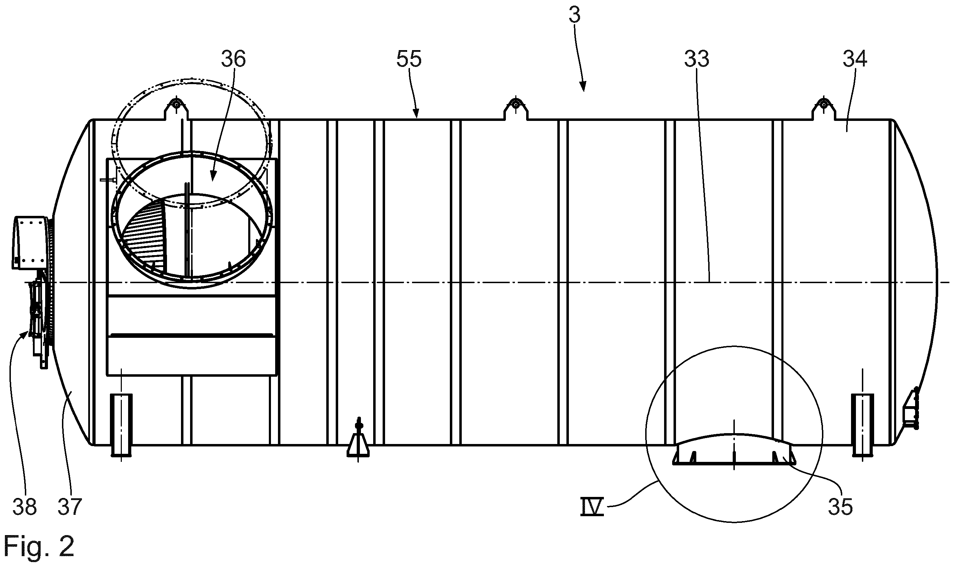

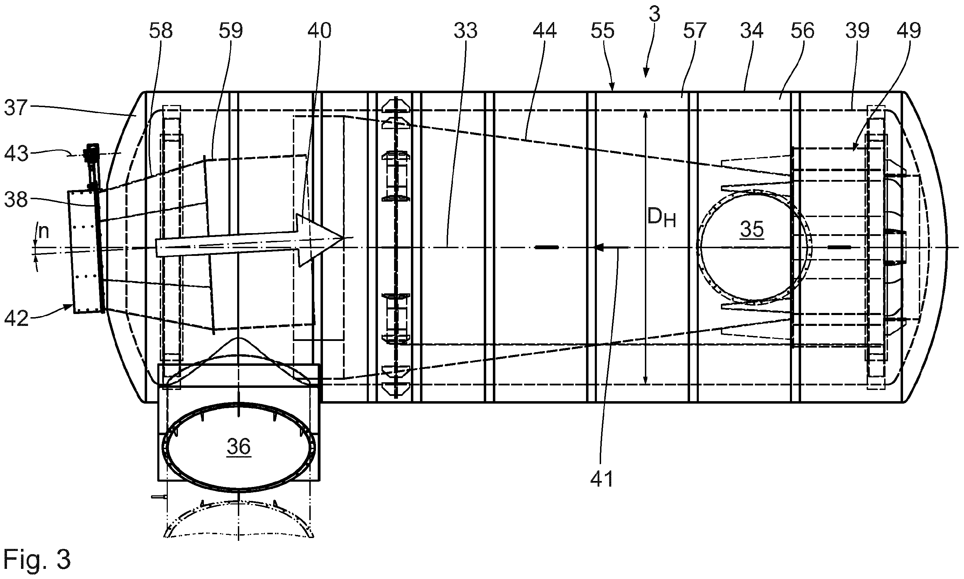

Nachfolgend wird anhand der Fig. 2 und Fig. 3 der Heißgaserzeuger 3 näher erläutert. Der Heißgaserzeuger 3 weist ein im Wesentlichen bezüglich einer Längsachse 33 zylindrisches Gehäuse 55 auf. Das Gehäuse 55 umfasst ein Außengehäuse 34 und ein Innengehäuse 39, die einen Hohlraum 56 umschließen, der teilweise oder vollständig mit einer Isolationsschicht 57 aus Isolationsmaterial gefüllt ist.

Die Dicke der Isolationsschicht 57 beträgt beispielsweise insgesamt 250 mm. Die Dicke kann mehr oder weniger als 250 mm betragen.

Die Isolationsschicht 57 ist insbesondere mehrlagig ausgeführt. Gemäß einer bevorzugten Ausführung weist die Isolationsschicht 57 drei Lagen auf. Die dem Innengehäuse 39 zugewandte erste Lage liegt insbesondere an dem Innengehäuse 39 zumindest bereichsweise und insbesondere vollflächig an. Die erste Lage weist eine erste Dicke von 50mm auf. Die erste Lage ist als Kalzium-Silikatfasermatte ausgeführt. Das Material der ersten Lage ist insbesondere für Hochtemperatur-Anwendungen geeignet. Insbesondere umfasst das Material der ersten Lage Keramikfasern. Das Raumgewicht für das Material der ersten Lage beträgt insbesondere mehr als 100kg/m³.

Die erste Lage ist von einer zweiten und einer dritten Lage umgeben, die dem Außengehäuse 34 zugewandt sind. Gemäß dem gezeigten Ausführungsbeispiel sind die zweite Lage und die dritte Lage aus identischem Material und identischer Dicke von jeweils 100mm ausgeführt. Daraus ergibt sich die Gesamtdicke der Isolationsschicht 57 von 250mm. Das Material der zweiten und dritten Lage ist gemäß dem gezeigten Ausführungsbeispiel Steinwolle mit einem Raumgewicht von 100kg/m³.

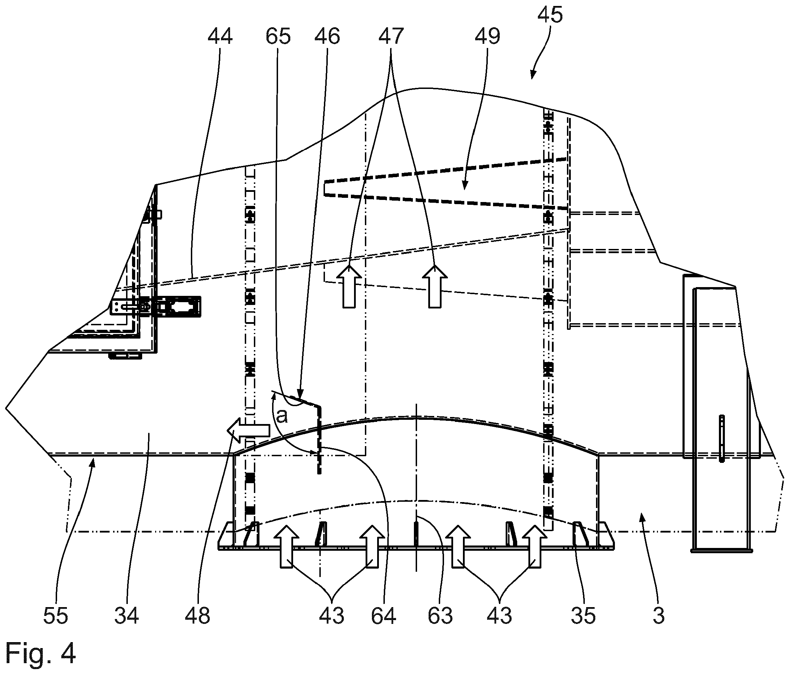

Das Außengehäuse 34 weist eine Umluft-Zuströmöffnung 35 auf, über die Umluft aus der Absaughaube 16 und die Umluft-Rückführleitung zugeführt wird. Die Umluft-Zuströmöffnung 35 ist an einer Unterseite des Außengehäuses 34 angeordnet. Die zugeführte Umluft durchströmt den Heißgaserzeuger 3 gemäß Fig. 3 im Wesentlichen von links nach rechts und verlässt den Heißgaserzeuger 3 über die Gas-Abführöffnung 36, an die die Heißgasleitung 4 zur Verbindung mit der Trockeneinheit 5 angeschlossen ist. Aus darstellerischen Gründen ist die Heißgasleitung 4 in Fig. 3 und 4 nicht gezeigt. Die Umluft-Zuströmöffnung wird auch als Gas-Zuströmöffnung 35 bezeichnet.

An einem in Fig. 3 links dargestellten Stirnseitendeckel 37 ist die nicht dargestellte Wärmequelle an das Außengehäuse 34 des Heißgaserzeugers 3 anschließbar. An dem Stirnseitendeckel 37 ist eine Hitzeschutzklappe 38 angeordnet, die gegenüber der Längsachse 33 mit einem Neigungswinkel n angeordnet ist. Der Neigungswinkel beträgt etwa 3 °. Durch die geneigte Anordnung der Hitzeschutzklappe 38 ist gewährleistet, dass die Flamme des Brenners der Wärmequelle 2 der Heißgas-Abströmöffnung 36 abgeneigt angeordnet ist. Dadurch wird verhindert, dass die Flamme des Brenners unmittelbar in die Heißgasleitung 4 eingezogen wird. Ein Unfallrisiko ist dadurch reduziert.

Der Heißgaserzeuger 3 weist ferner ein Innengehäuse 39 auf, das in Fig. 4 gestrichelt dargestellt ist. Der Hohlraum 56 ist durch das Innengehäuse 39 und das Außengehäuse 34 begrenzt. Das Innengehäuse 39 weist einen Innendurchmesser D_{H} auf, der kleiner ist als der Innendurchmesser D_{A} der Absaughaube 16. Über die Gas-Zuströmöffnung 35 gelangt die Umluft in das Innengehäuse 39. Die Umluft kann mit einem ersten Teilstrom innerhalb eines kegelstumpfförmig ausgeführten Brennraums 44 strömen. Ein weiterer Teilstrom der Umluft umströmt den Brennraum 44 von außen. Der erste, im Inneren des Brennraum 44 angeordnete Teilstrom wird unmittelbar von der Flamme des Brenners beaufschlagt. Der zweite, den Brennraum 44 umströmende Teilstrom ermöglicht eine Kühlung des Brennraums 44. Die Zuführung der Wärme entlang einer Wärmeausbreitungsrichtung 40, also der Brennerflamme, ist dem zu erwärmenden Luftstrom entlang einer Gasströmungsrichtung 41 bei dem Heißgaserzeuger 3 im Wesentlichen entgegengesetzt. Der Heißgaserzeuger 3 wird im Gegenstromverfahren betrieben.

Der Brenner 2 ist gegenüber dem Heißgaserzeuger 3 entlang einer Fahrrichtung verfahrbar. Dazu sind an einer Unterseite des Brenners 2 Rollen vorgesehen, mit welchen der Brenner 2 auf korrespondierenden Schienen abrollen kann. Die Fahrbewegung des Brenners 2 entlang der Fahrrichtung erfolgt mittels eines Aktuators, der gemäß dem gezeigten Ausführungsbeispiel als Pneumatikzylinder ausgeführt ist. Der Aktuator ist ein linear wirkendes Stellelement und bewirkt eine unmittelbare Verlagerung entlang der Fahrrichtung, entweder zu dem Heißgaserzeuger 3 hin oder von dem Heißgaserzeuger 3 weg. Der Aktuator kann beispielsweise auch ein elektrisch angetriebener Linearmotor sein. Anstelle des Pneumatikzylinders kann auch ein Hydraulikzylinder verwendet werden.

Aufgrund der Verfahrbarkeit des Brenners 2 ist es möglich, nach einem Befeuern des Heißgaserzeugers 3 den Brenner 2 entlang der Fahrrichtung 68 von dem Heißgaserzeuger 3 zu entfernen. In einer maximal verfahrbaren Anordnung ist der Brenner 2 in einem Abstand von mindestens 0,3 m, insbesondere mindestens 0,5 m und insbesondere mindestens 1 m gegenüber dem Heißgaserzeuger 3, insbesondere dem Stirnseitendeckel 37, angeordnet. Eine Wärme-Zuführöffnung 42 am Stirnseitendeckel 37 kann mittels der Hitzeschutzklappe 38 abgeschlossen werden. Dabei schwenkt die Hitzeschutzklappe 38 um eine im Wesentlichen horizontale Schwenkachse 43. Die Schwenkbewegung der flächigen Hitzeschutzklappe 38 erfolgt in einer vertikalen Ebene. Die Flächennormale der vertikalen Ebene ist entsprechend dem Neigungswinkel n gegenüber der Behälterlängsachse 33 geneigt.

Dadurch, dass die Hitzeschutzklappe 38 in der vertikalen Ebene verschwenkbar ist, kann die Wärme-Zuführöffnung 42 schneller und unkomplizierter geschlossen werden. Insbesondere ist ein vergleichsweise geringer Verfahrweg des Brenners 2 entlang der Fahrrichtung 68 ausreichend, um die Hitzeschutzklappe 38 zu schließen. Ein erforderlicher Mindestabstand des Brenners gegenüber dem Stirnseitendeckel 37 des Heißgaserzeugers 3 ist reduziert.

Dadurch, dass der Brenner 2 gegenüber dem Heißgaserzeuger 3 nach Abschluss eines Brennvorgangs entfernt werden kann, ist das Risiko einer Schädigung des Brenners 2 reduziert. Der Heißgaserzeuger 3 strahlt über sein Außengehäuse 34 und insbesondere über den Stirnseitendeckel 37 hohe Temperaturen ab. An dem Brenner vorhandene Komponenten, insbesondere Elektronikkomponenten wie eine Flammüberwachung und der Gebläsemotor, aber auch elektrische Leitungen, insbesondere Zündkabel, könnten dadurch geschädigt werden. Dadurch, dass der Brenner 2 in einem vergrößerten Abstand zu dem Heißgaserzeuger anordenbar ist, ist die thermische Beeinträchtigung der elektronischen Komponenten reduziert.

Als Brennstoff für den Brenner 2 dient gemäß dem gezeigten Ausführungsbeispiel Gas und/oder Braunkohle. Es sind auch andere Brennstoffe möglich wie beispielsweise Öl.

Eine Brenner-Schutzvorrichtung dient zum Schutz des Brenners 2 vor Überhitzung. Die Brenner-Schutzvorrichtung umfasst den Brenner 2, der mit dem Heißgaserzeuger 3 verbindbar ist, den Pneumatikzylinder und die Hitzeschutzklappe 38.

Nachfolgend wird anhand von Fig. 4 eine Strömungsumlenkeinheit 45 näher erläutert. Durch die Gas-Zuströmöffnung 35 dem Heißgaserzeuger 3 zugeführtes Gas 43 wird mittels mindestens eines Strömungsumlenkelements 46 in einen Hauptstrom 47 und einen abgezweigten Teilstrom 48 aufgeteilt. Das Strömungsumlenkelement 46 ist in Form eines Luftleitblechs an einem Außenbereich des konisch geformten Brennraums 44 angeordnet. Der abgezweigte Teilstrom 48 wird nicht unmittelbar erwärmt und umströmt den Brennraum 44 von außen. Der abgezweigte Teilstrom 48 bewirkt eine Kühlung des Brennraums 44 von außen. Der Teilstrom 48 wird von dem in radialer Richtung bezüglich der Längsachse 33 zugeführten Gasstrom 43 derart umgelenkt, dass er im Wesentlichen parallel zur Längsachse 33 entlang einer Innenseite des Innengehäuses 39 strömt. Die Umlenkung des Teilstroms 48 erfolgt mittels eines Konusabschnitts 65 des Strömungsumlenkelements 46.

Bezogen auf eine Mittellinie 63 der Gas-Zuströmöffnung 35 ist das Strömungsumlenkelement 46 exzentrisch angeordnet. Die Mittellinie 63 ist senkrecht und insbesondere radial zur Längsachse 33 orientiert.

Das Strömungsumlenkelement 46 ist in der Längsschnittebene gemäß Fig. 4 im Wesentlichen L-förmig ausgeführt. Das Strömungsumlenkelement 46 weist einen Ringbund 64 auf, der insbesondere senkrecht zur Längsachse 33 orientiert ist. Der Ringbund 64 erstreckt sich zumindest anteilig entlang einer Umfangsrichtung um die Längsachse 33. An einer Innenkante des Ringbundes 64 ist ein Konusabschnitt 65 angeordnet, der einstückig an dem Ringbund 64 angeformt ist. Der Konusabschnitt 65 ist dem Brennraum 44 zugewandt. In der Schnittebene gemäß Fig. 4 schließen der Ringbund 64 und der Konusabschnitt 65 einen Konuswinkel a ein. Gemäß dem gezeigten Ausführungsbeispiel beträgt der Konuswinkel a 100°. Vorteilhaft ist es, wenn der Konuswinkel a zwischen 90° und 180°, insbesondere zwischen 95° und 150°, insbesondere zwischen 100° und 135° beträgt.

Ausgehend von der Wärmezuführöffnung 42 erstreckt sich in den Innenraum des Heißgaserzeugers 3 ein Abschirmelement 58, das konzentrisch zur Wärmeausbreitungsrichtung 40 zunächst einen konisch aufweitenden Verlauf aufweist. An dem Abschirmelement 58 ist ein bezüglich der Wärmeausbreitungsrichtung 40 zylindrisch ausgeführtes Verlängerungselement 59 angeordnet. Der Durchmesser des Verlängerungselements 59 entspricht in etwa dem Durchmesser des aufgeweiteten Konusabschnitts des Abschirmelements 58. Entlang der Längsachse 33 steht das Abschirmelement 58 mit dem Verlängerungselement 59 an der Gas-Abführöffnung 36 über.

Der Hauptstrom 47 strömt entlang einer radialen Richtung, also quer und insbesondere senkrecht zur Längsachse 33 in das Innengehäuse 39 des Heißgaserzeugers 3. Der Hauptstrom 47 wird einem ringförmigen Strömungskanal 49 der Strömungsumlenkeinheit 45 zugeführt. Der Strömungskanal 49 ermöglicht ein Zuströmen des Hauptstroms 47 über eine Eingangsöffnung, deren Flächennormale eine Kreislinie in Umfangsrichtung um die Längsachse 33 gebildet ist. Der Hauptstrom 47 wird abschnittsweise entlang dieser Kreislinie in dem Strömungskanal 49 geführt. Der Strömungskanal 49 erstreckt sich beispielsweise über einen Drehwinkel von 90° um die Längsachse 33 entlang der Kreislinie. Der Strömungskanal 49 weist eine Austrittsöffnung auf, deren Flächennormale im Wesentlichen parallel zur Längsachse 33 orientiert ist. Beim Durchströmen des Strömungskanals 49 erfährt der Hauptstrom 47 eine erste Strömungskomponente, die in Umfangsrichtung um die Längsachse 33 orientiert ist und eine zweite Strömungskomponente, die in axialer Richtung zur Längsachse 33 orientiert ist. Eine Überlagerung dieser beiden Strömungskomponenten bewirkt eine schraubenlinienförmige Strömungsrichtung. Über den Gesamtumfang um die Längsachse 33 weist der Strömungskanal 49 mehrere, insbesondere vier, Eintritts- und korrespondierende Austritts-Öffnungen auf. Entlang der Umfangskreislinie ist der Strömungsquerschnitt des Strömungskanals 49 im Wesentlichen rechteckig. Der Strömungsquerschnitt kann auch eine andere Kontur aufweisen. Der Strömungskanal 49 weist eine ringförmige Kontur in einer Ebene senkrecht zur Längsachse 33 auf. Der Hauptstrom 47 wird mittels des Strömungskanals 49, der auch als Drallgeber bezeichnet wird, in eine schraubenlinienförmige Strömung um die Längsachse 33 überführt. Der Hauptstrom 47 des Gases wird dem Brennraum 44 zugeführt und breitet sich entlang der Gasströmungsrichtung 41 sich aufweitenden Brennraums 44 entlang dessen Innenwand konisch aufweitend aus. Dadurch ist verhindert, dass das zu erwärmende Gas unmittelbar mit der Flamme des Brenners in Berührung kommt.

Durch die Positionierung des Strömungsumlenkelements 46 innerhalb des Gehäuses 55, insbesondere relativ zu der Gas-Zuströmöffnung 35 wird die Aufteilung des zugeführten Gasstroms 43 in den Hauptstrom 47 und den Teilstrom 48 unmittelbar beeinflusst werden. Vorteilhaft ist es insbesondere, wenn das Strömungsumlenkelement 46 lageveränderlich in dem Gehäuse 55 angeordnet ist. Besonders vorteilhaft ist es, wenn das Strömungsumlenkelement 46 bezüglich der Längsachse 33 in dem Gehäuse verlagerbar ist.

Das dem Heißgaserzeuger 3 zugeführte Gas weist typischerweise eine Temperatur von etwa 100 °C auf. Durch die zugeführte Wärme der Brennerflamme wird das Gas entlang der Gasströmungsrichtung 41 kontinuierlich erwärmt. Das Heißgas verlässt den Heißgaserzeuger mit einer Temperatur von mehr als 500 °C über die Gas-Abströmöffnung 36.

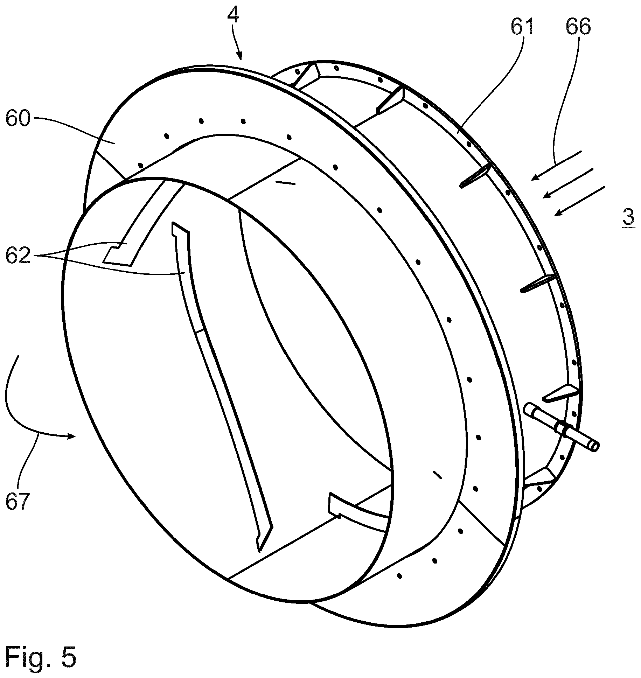

Nachfolgend wird anhand der Fig. 5 ein Abschnitt der Heißgasrohrleitung 4 und deren Aufbau näher beschrieben. Mit dem Flanschabschnitt 60 kann die Heißgas-Rohrleitung 4 an einen Stutzen 61 des in Fig. 5 nicht dargestellten Heißgaserzeugers 3 angeflanscht werden. An einer Innenseite der Heißgasrohrleitung 4 sind mehrere Strömungsleitelemente 62 angeschweißt. Die Strömungsleitelemente 62 sind jeweils als Luftleitbleche in Form einer Schraubenlinienkontur über etwa einen Drehwinkel von 90° um die Längsachse der Heißgasrohrleitung 4 ausgeführt. Die Luftleitbleche ragen geringfügig in den Rohrquerschnitt hervor. In Folge der Strömungsleitelemente 62 wird eine gerichtete, entlang der Längsachse der Heißgas-rohrleitung 4 orientierte Gasströmung 66 in eine dazu helixförmige Gasströmung überführt. Das bedeutet, dass der Heißgasaustritt aus der Heißgasrohrleitung 4 drallförmig ist. Dadurch ist die Wärmeverteilung in der Heißgasleitung 4 und insbesondere in der Trockeneinheit 5 verbessert.

Eine Gasströmung 66, die im Wesentlichen linear aus dem Heißgaserzeuger 3 durch den Stutzen 61 austritt, wird durch die Strömungsleitelemente 62 in der Heißgasrohrleitung 4 in die helixförmige Gasströmung 67 entlang der Heißgasrohrleitung 4 überführt.

## Patentansprüche

1. Heißgaserzeuger (3) zum Erwärmen von Gas umfassend ein bezüglich einer Längsachse (33) zylindrisches Gehäuse (55) mit
a. einer Wärme-Zuführöffnung (42), an die zum Zuführen von Wärme entlang einer Wärmeausbreitungsrichtung (40) eine als Brenner ausgeführte Wärmequelle (2) anschließbar ist,
b. einer Gas-Zuströmöffnung (35) zum Zuführen von Gas, wobei eine Flächennormale der Gas-Zuströmöffnung (35) senkrecht zur Längsachse (33) orientiert ist,
c. einer Gas-Abführöffnung (36) zum Abführen des erwärmten Gases,
d. einer von der Gas-Zuströmöffnung (35) zu der Gas-Abführöffnung (36) orientierten Gasströmungsrichtung (7), die der Wärmeausbreitungsrichtung (40) entgegengesetzt orientiert ist,
e. einer Strömungsumlenkeinheit (45) zur Umlenkung der Gasströmung im Gehäuse (55),
wobei das Gehäuse (55) ein Außengehäuse (34) und ein Innengehäuse (39) aufweist, die einen Hohlraum (56) umschließen, wobei der Hohlraum (56) mit einer Isolationsschicht (57) aus Isolationsmaterial zur Wärmeisolierung gefüllt ist,
**dadurch gekennzeichnet, dass**
- die Strömungsumlenkeinheit (45) einen bezüglich der Längsachse (33) ringförmigen Strömungskanal (49) für einen Hauptstrom des zugeführten Gases aufweist zur Erzeugung einer bezüglich der Längsachse (33) schraubenlinienförmigen Gasströmung, die um die offene Brennerflamme der Wärmequelle (2) herumgeführt ist,
- der Heißgaserzeuger (3) einen sich entlang der Wärmeausbreitungsrichtung (40) verjüngenden Brennraum (44) aufweist,
- die Strömungsumlenkeinheit (45) mindestens ein Strömungsumlenkelement (46) zum Abzweigen zumindest eines Teilstroms des zugeführten Gases aufweist, wobei der abgezweigte Teilstrom zur gezielten Kühlung des Brennraums (44) dient.

2. Heißgaserzeuger (3) gemäß Anspruch 1, **dadurch gekennzeichnet, dass** die Strömungsumlenkeinheit (45) benachbart zu der Gas-Zuströmöffnung (35) angeordnet ist.

3. Heißgaserzeuger (3) gemäß einem der vorstehenden Ansprüche, **gekennzeichnet durch** ein im Bereich der Wärme-Zuführöffnung (42) angeordnetes Abschirmelement (58), das insbesondere entlang der Längsachse (33) an der Gas-Abführöffnung (36) übersteht.

4. Heißgaserzeuger (3) gemäß Anspruch 3, **dadurch gekennzeichnet, dass** das Abschirmelement (58) sich entlang der Wärmeausbreitungsrichtung (40), insbesondere konisch, erweitert, wobei das Abschirmelement (58) insbesondere ein Verlängerungselement (59) aufweist, das insbesondere zylindrisch ausgeführt ist.

5. Anlage für die Asphaltherstellung umfassend
a. eine Trockeneinheit (5) zum Trocknen von Material,
b. einen Heißgaserzeuger (3) gemäß einem der vorstehenden Ansprüche zum Bereitstellen von Heißgas für die Trockeneinheit (5),
c. eine an den Heißgaserzeuger (3) anschließbare Wärmequelle (2).

6. Anlage gemäß Anspruch 5, **dadurch gekennzeichnet, dass** die Trockeneinheit (5) als Gegenstromtrommel ausgeführt ist.

7. Anlage gemäß Anspruch 5 oder 6, **gekennzeichnet durch** einen an die Trockeneinheit (5) angeschlossenen Materialauslauf (12) zum Abführen des in der Trockeneinheit (5) getrockneten Materials.

8. Anlage gemäß Anspruch 7, **gekennzeichnet durch** einen im Bereich des Materialauslaufs (12) angeordneten Temperatursensor (53), insbesondere in Form einer IR-Sonde, zum Überwachen der Materialtemperatur.

9. Anlage gemäß einem der Ansprüche 5 bis 8, **gekennzeichnet durch** eine Regelungseinheit (54) zum geregelten Betreiben der Anlage (1), insbesondere zur Beeinflussung der Heißgastemperatur und/oder des Materialstroms in der Trockeneinheit (5), in Abhängigkeit der Materialtemperatur.

10. Anlage gemäß einem der Ansprüche 5 bis 9, **gekennzeichnet durch** eine an die Gas-Abführöffnung (36) angeschlossene Heißgasrohrleitung (4) zum Ableiten des Heißgases an die Trockeneinheit (5), wobei entlang der Heißgasrohrleitung (4) mindestens ein Strömungsleitelement (62) vorgesehen ist.

11. Anlage gemäß Anspruch 10, **dadurch gekennzeichnet, dass** das Strömungsleitelement (62) an einer Innenseite der Heißgasrohrleitung (4) befestigt ist, wobei das Strömungsleitelement (62) insbesondere als Leitblech ausgeführt ist.

## Claims

1. Hot gas generator (3) for heating gas, comprising a housing (55) which is cylindrical with respect to a longitudinal axis (33) and has
a. a heat supply opening (42) to which a heat source (2) designed as a burner can be connected for supplying heat along a heat propagation direction (40),
b. a gas inflow opening (35) for supplying gas, wherein a surface normal of the gas inflow opening (35) is orientated perpendicular to the longitudinal axis (33),
c. a gas discharge opening (36) for discharging the heated gas,
d. a gas flow direction (7) orientated from the gas inflow opening (35) to the gas discharge opening (36), which is orientated in the opposite direction to the heat propagation direction (40),
e. a flow diverter unit (45) for diverting the gas flow in the housing (55),
wherein the housing (55) comprises an outer housing (34) and an inner housing (39) which enclose a cavity (56), wherein the cavity (56) is filled with an insulating layer (57) of insulating material for thermal insulation,
**characterized in that**
- the flow diverter unit (45) has an annular flow channel (49) with respect to the longitudinal axis (33) for a main stream of the supplied gas for generating a helical gas flow with respect to the longitudinal axis (33), which is guided around the open burner flame of the heat source (2),
- the hot gas generator (3) has a combustion chamber (44) that tapers along the heat propagation direction (40),
- the flow diverter unit (45) has at least one flow diverter element (46) for diverting at least a substream of the supplied gas, wherein the diverted partial flow is used for targeted cooling of the combustion chamber (44).

2. Hot gas generator (3) according to claim 1, **characterized in that** the flow diverter unit (45) is arranged adjacent to the gas inflow opening (35).

3. Hot gas generator (3) according to any one of the preceding claims, **characterized by** a shielding element (58) arranged in the region of the heat supply opening (42), which in particular projects along the longitudinal axis (33) at the gas discharge opening (36).

4. Hot gas generator (3) according to claim 3, **characterized in that** the shielding element (58) widens along the heat propagation direction (40), in particular conically, the shielding element (58) having in particular an extension element (59) which is designed in particular to be cylindrical.

5. System for asphalt production comprising
a. a drying unit (5) for drying material,
b. a hot gas generator (3) according to any one of the preceding claims for providing hot gas for the drying unit (5),
c. a heat source (2) that can be connected to the hot gas generator (3).

6. System according to claim 5, **characterized in that** the drying unit (5) is designed as a countercurrent drum.

7. System according to claim 5 or 6, **characterized by** a material outlet (12) connected to the drying unit (5) for discharging the material dried in the drying unit (5).

8. System according to claim 7, **characterized by** a temperature sensor (53) arranged in the region of the material outlet (12), in particular in the form of an IR probe, for monitoring the material temperature.

9. System according to any one of claims 5 to 8, **characterized by** a regulation unit (54) for the regulated operation of the system (1), in particular for influencing the hot gas temperature and/or the material stream in the drying unit (5), in dependence of the material temperature.

10. System according to any one of claims 5 to 9, **characterized by** a hot gas pipe (4) connected to the gas discharge opening (36) for discharging the hot gas to the drying unit (5), wherein at least one flow guide element (62) is provided along the hot gas pipe (4).

11. System according to claim 10, **characterized in that** the flow guide element (62) is fastened to an inner side of the hot gas pipe (4), wherein the flow guide element (62) is designed in particular as a baffle plate.

## Revendications

1. Générateur de gaz chaud (3) pour chauffer du gaz, comprenant un boîtier (55) cylindrique par rapport à un axe longitudinal (33) avec
a. un orifice d'alimentation de chaleur (42), à laquelle peut être raccordée une source de chaleur (2) réalisée sous forme de brûleur pour l'alimentation de chaleur le long d'une direction de propagation de la chaleur (40),
b. un orifice d'entrée de gaz (35) pour l'alimentation en gaz, une normale à la surface de l'orifice d'entrée de gaz (35) étant orientée perpendiculairement à l'axe longitudinal (33),
c. un orifice d'évacuation de gaz (36) pour évacuer le gaz chauffé,
d. une direction d'écoulement de gaz (7) orientée de l'orifice d'entrée de gaz (35) à l'orifice d'évacuation de gaz (36), qui est orientée à l'opposé de la direction de propagation de chaleur (40),
e. une unité de déviation de flux (45) pour dévier le flux de gaz dans le boîtier (55),
dans lequel le boîtier (55) comprend un boîtier extérieur (34) et un boîtier intérieur (39) qui entourent une cavité (56), dans lequel la cavité (56) est remplie d'une couche d'isolation (57) de matériau isolant pour l'isolation thermique,
**caractérisé en ce que**
- l'unité de déviation de flux (45) présente un canal d'écoulement (49) annulaire par rapport à l'axe longitudinal (33) pour un flux principal du gaz alimenté pour générer un écoulement de gaz hélicoïdal par rapport à l'axe longitudinal (33), qui est guidé autour de la flamme de brûleur ouverte de la source de chaleur (2),
- le générateur de gaz chaud (3) présente une chambre de combustion (44) qui se rétrécit le long de la direction de propagation de chaleur (40),
- l'unité de déviation du flux (45) présente au moins un élément de déviation du flux (46) pour dévier au moins un flux partiel du gaz alimenté, le flux partiel dévié servant au refroidissement ciblé de la chambre de combustion (44).

2. Générateur de gaz chaud (3) selon la revendication 1, **caractérisé en ce que** l'unité de déviation de flux (45) est disposée à proximité de l'orifice d'entrée de gaz (35).

3. Générateur de gaz chaud (3) selon l'une quelconque des revendications précédentes, **caractérisé par** un élément de blindage (58) disposé dans la zone de l'orifice d'alimentation de chaleur (42), qui fait saillie en particulier le long de l'axe longitudinal (33) au niveau de l'orifice d'évacuation de gaz (36).

4. Générateur de gaz chaud (3) selon la revendication 3, **caractérisé en ce que** l'élément de blindage (58) s'élargit le long de la direction de propagation de chaleur (40), en particulier de manière conique, l'élément de blindage (58) présentant en particulier un élément de prolongement (59), qui est réalisé en particulier sous forme cylindrique.

5. Installation pour la production d'asphalte comprenant
a. une unité de séchage (5) pour le séchage de la matière,
b. un générateur de gaz chaud (3) selon l'une quelconque des revendications précédentes pour fournir du gaz chaud à l'unité de séchage (5),
c. une source de chaleur (2) pouvant être raccordée au générateur de gaz chaud (3).

6. Installation selon la revendication 5, **caractérisée en ce que** l'unité de séchage (5) est réalisée sous forme de tambour à contre-courant.

7. Installation selon la revendication 5 ou 6, **caractérisée par** une sortie de matière (12) raccordée à l'unité de séchage (5) pour évacuer la matière séchée dans l'unité de séchage (5).

8. Installation selon la revendication 7, **caractérisée par** un capteur de température (53) disposé dans la zone de la sortie de matière (12), en particulier sous la forme d'une sonde IR, pour surveiller la température de la matière.

9. Installation selon l'une quelconque des revendications 5 à 8, **caractérisée par** une unité de régulation (54) pour le fonctionnement régulé de l'installation (1), en particulier pour influencer la température du gaz chaud et/ou le flux de matière dans l'unité de séchage (5), en fonction de la température de la matière.

10. Installation selon l'une quelconque des revendications 5 à 9, **caractérisée par** une tuyauterie de gaz chaud (4) raccordée à l'orifice d'évacuation de gaz (36) pour évacuer le gaz chaud vers l'unité de séchage (5), au moins un élément de guidage de flux (62) étant prévu le long de la tuyauterie de gaz chaud (4).

11. Installation selon la revendication 10, **caractérisée en ce que** l'élément de guidage de flux (62) est fixé sur un côté intérieur de la tuyauterie de gaz chaud (4), l'élément de guidage de flux (62) étant réalisé en particulier sous forme de tôle de guidage.
